Europäisches Patentamt

European Patent Office

Office européen des brevets

(19)

(11) **EP 0 595 216 B1**

(12) **EUROPEAN PATENT SPECIFICATION**

(45) Date of publication and mention
of the grant of the patent:
**14.05.1997 Bulletin 1997/20**

(51) Int Cl.$^6$: **H04N 7/167**

(21) Application number: **93117130.0**

(22) Date of filing: **22.10.1993**

(54) **Method and system for the encryption of a video picture**

Verfahren und System zur Verschlüsselung eines Videobildes

Méthode et système de chiffrage d'une image video

(84) Designated Contracting States:
**DE FR GB IT**

(30) Priority: **30.10.1992 FI 924941**

(43) Date of publication of application:
**04.05.1994 Bulletin 1994/18**

(73) Proprietor: **NOKIA TECHNOLOGY GmbH**
**75175 Pforzheim (DE)**

(72) Inventors:
• **Heikkinen, Ari**
**SF-24260 Salo (FI)**

• **Kangas, Mauri**
**SF-21530 Paimio (FI)**
• **Raussi, Juha**
**SF-24280 Salo (FI)**
• **Hiltunen, Reino**
**SF-24280 Salo (FI)**

(56) References cited:
**WO-A-91/13517**          **WO-A-91/14341**
**US-A- 5 161 188**

## Description

The present invention relates to a method and a system for encryption of a video picture, in which lines of the video picture are shuffled.

As pay-TV transmissions with different transmission modes are becoming common, such as in cable and satellite transmissions, it is also necessary to be able to transmit a high quality video signal, which is safely encrypted. Generally these systems do not control by whom the signals are received, and therefore the signals must be encoded to prevent unauthorized use of the received signals. Different video signal coding and shuffling techniques have been developed for the encryption of the video signal, and some of these techniques proved to be more difficult to decrypt while some of them were easier to decrypt.

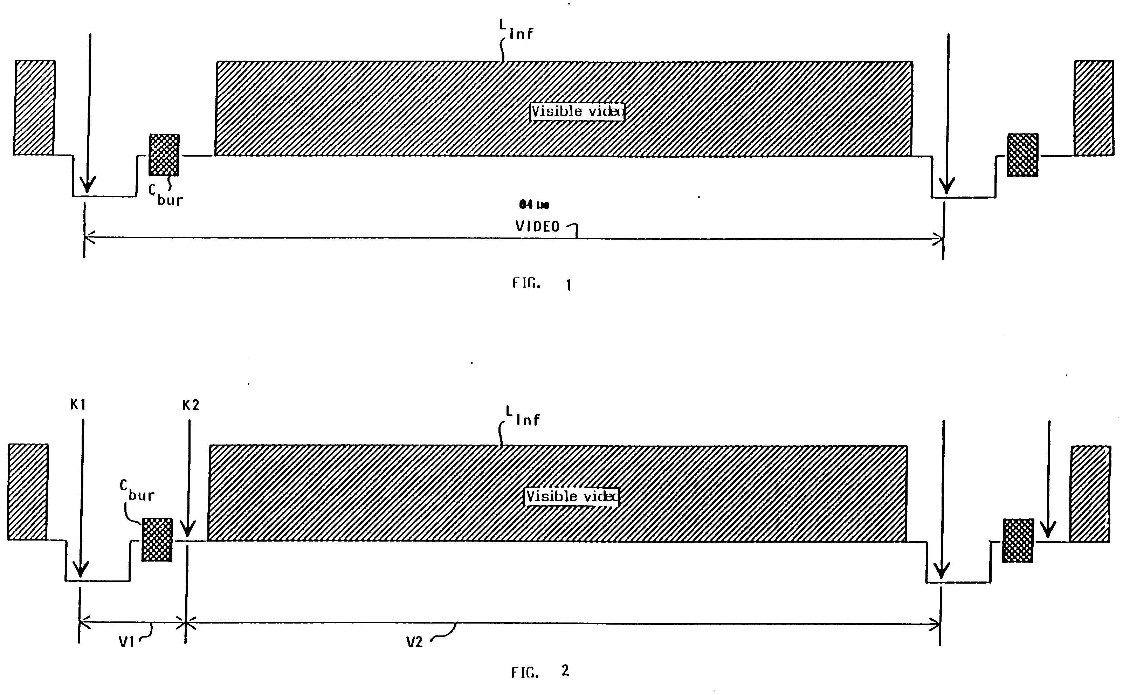

One method to encrypt a video picture is to shuffle the video lines by moving their position over the whole picture area or within some sub-area of the picture, which usually is called the encryption area. One example for such an encryption/decryption system is described in WO-A-9114341. The line shuffling described in this document is realized in blocks of 32 lines by reading information corresponding to 32 lines from the memory in a first predetermined order and writing new input line information into the corresponding locations, and then reading from, and writing to, the memory in a second different order and subsequently repeating these read/write operations alternately. The shuffling of the video lines is a quite reliable encryption method, because it is difficult to decrypt. When whole video lines are moved the color burst is also moved along with the other line information. Figure 1 shows a roughly simplified video line signal VIDEO, which comprises the color burst $C_{bur}$ and the information of the visible part $L_{inf}$. As the video line signals arrive in a sequence the video lines VIDEO are separated from the signal sequence by breaking the sequence, as is shown in the figure, so that the VIDEO lines can be shuffled. The original position of the VIDEO line can be calculated with the aid of the color burst, whereby it is possible, at least in theory, to perform unauthorized decryption of the video picture's encryption based on line order shuffling, by measuring the phase of the color burst with sufficient accuracy.

This is due to the fact that the current PAL colour television standard for B, G, H, I as e.g. described in CCIR report 624, table II, item 2.11 (b) specifies a relationship between chrominance subcarrier frequency and line frequency of

$$f_{SC} = \left( \frac{1135}{4} + \frac{1}{625} \right) f_H .$$

It can be shown that if the colour burst phase can be measured with an accuracy of ±2 degrees, the number of candidate lines belonging to this particular burst period is only typically 3, sometimes only 2.

The object of the present invention is to present a method and a system to improve the encryption level of a video picture, which is encrypted by shuffling the line order. The encryption level is improved by preventing decryption, which utilizes the phase of the color burst, of the video picture encryption, which is based on line order shuffling. To realize this the video line is divided into two parts, of which one contains the visible part of the video line, and the other part at least the color burst. The method according to the invention can be called the method of two breaking points.

The solution of the invention is set out in claims 1 and 7.

The invention is described in detail below with reference to the enclosed figures, in which:

figure 1 shows the video line of the video system of one division point;
figure 2 shows the video line of the video system of two division points;
figure 3 shows a video picture encrypted according to the invention; and
figure 4 shows a system for the encryption of video picture with the method according to the invention.

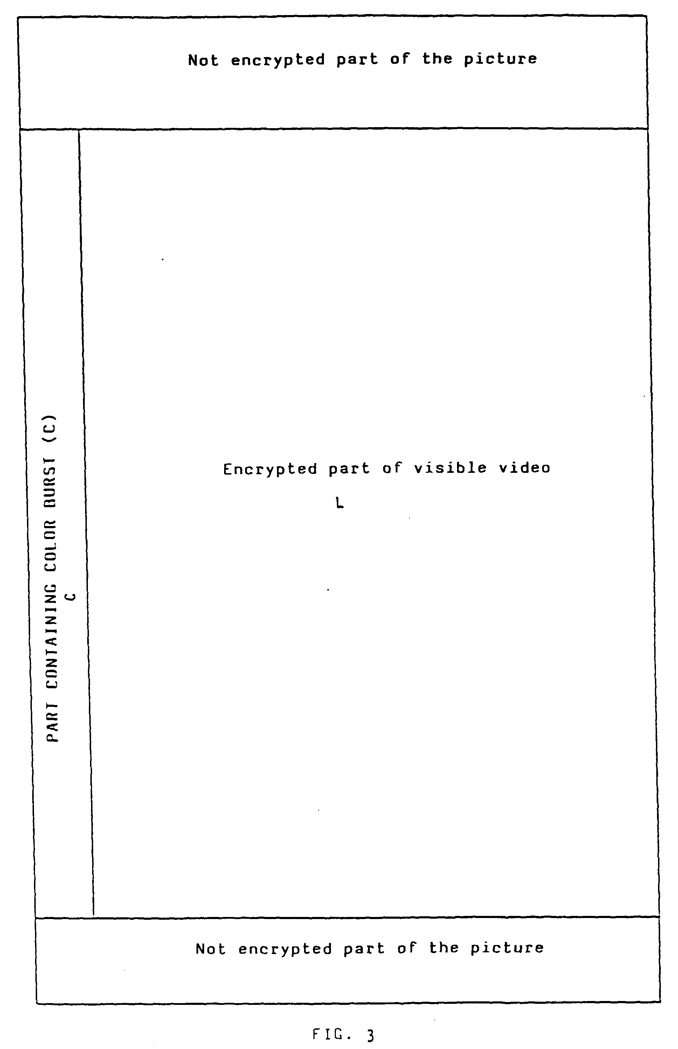

The figure 1 was already referred to above, and in the following the invention is described mainly with reference to the figures 2, 3 and 4. Figure 2 shows a video line signal VIDEO, which comprises the line information $L_{inf}$ (the information of the visible part of the line) and the color burst $C_{bur}$. The figure further shows the division points K1, K2 of the line signal. In order to shuffle the line a signal is separated from the incoming video signal at the first division point K1. According to the invention the video signal is now further divided at a second division point K2 so that the color burst $C_{bur}$ is separated from the line information $L_{inf}$. These two parts V1, V2 are processed as separate parts in the encryption, so that the picture contains two encryption areas L and C (and the not encrypted areas, if the encryption does not cover the whole picture area), the first area C containing the parts V1, which contain the color bursts encrypted by some algorithm, and the second area L containing the parts V2, which contain the visible parts of the lines shuffled by some other algorithm, as is shown in figure 3. The parts V1 containing the color bursts $C_{bur}$ can now also be left in their original positions without shuffling them.

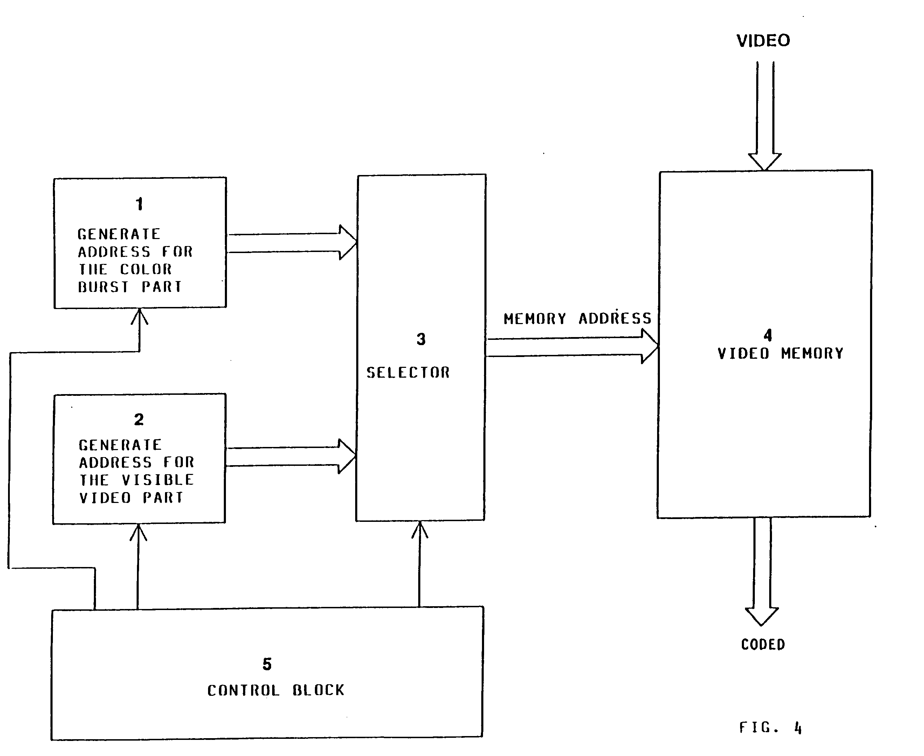

The invention can be realized e.g. with a system according to figure 4. Then the second break K2 can be made while the digitized video picture VIDEO is written into the video memory 4, whereby the part V1 containing the color burst $C_{bur}$ of the signal VIDEO can be given an address different from that of the other part V2 (the encrypted video signal CODED is obtained at the output of the memory 4). A simple way is to organize a linear addressing for the part V1 containing the color burst $C_{bur}$, i.e. to write and read said part V1 in its original position, without shuffling it. Two address generators 1 and 2 are arranged to generate the different addresses; the first 1 to generate the address of the color burst $C_{bur}$ and the second 2 to generate the address of the other part V2. The address selection is made with the aid of the selector 3 and the control block 5, which controls the address generators 1 and 2, the selector receiving the outputs of both address generators 1, 2, whereby the desired address is obtained at the output of the selector 3 controlled by the control block 5. The control block 5 also manages the initialization of the blocks 1, 2, which generate the addresses.

The decryption of the encrypted video picture with aid of the phase of the color burst is eliminated when according to the invention the color burst is separated from the rest of the video line signal. Thus a more reliable encrypted video picture is obtained in a simple way.

**Claims**

1. Method for encryption of a video picture, realized in a transmitting end by means for transmitting lines (VIDEO) of the video picture in an order which is different from their order in the original unshuffled picture, the means comprising memory means (4), which comprise several line memories, and address generating means (1, 2) responding to control signals generated by a control block (5) according to predetermined algorithms to provide memory addresses to the lines to be shuffled for them to be stored in a new shuffled order into a particular line memory of the memory means (4), whereby the shuffled video picture (CODED) is obtained at the output of the memory means (4), where the lines to be shuffled are divided into two parts (V1, V2), of which one (V2) contains the information ($L_{inf}$) of the visible part of the video line, and the other part (V1) contains at least the color burst ($C_{bur}$).

2. Method according to claim 1, **characterized in that** the line to be shuffled is divided into two parts (V1, V2) by cutting.

3. Method according to claim 1, **characterized in that** the parts (V2) the information ($L_{inf}$) of the visible part of the lines to be shuffled are mutually shuffled according to a particular algorithm.

4. Method according to claim 3, **characterized in that** the parts (V1) the color burst ($C_{bur}$) of the lines to be shuffled are mutually shuffled according to another particular algorithm.

5. Method according to claim 3, **characterized in that** the parts (V1) comprising the color burst ($C_{bur}$) of the lines to be shuffled are kept in the line order of the original unshuffled picture.

6. Method according to any previous claim, **characterized in that** the different parts (V1, V2) of the line are provided with different memory addresses.

7. A system for encryption and decryption of a video picture, comprising in a transmitting end means to transmit lines (VIDEO) of the video picture in an order which is different from their order in the original unshuffled picture, the means comprising memory means (4), which comprise several line memories, and address generating means (1, 2) responding to control signals generated by a control block (5) according to predetermined algorithms to provide memory addresses to the lines to be shuffled for them to be stored in a new shuffled order into a particular line memory of the memory means (4), whereby the shuffled video picture (CODED) is obtained at the output of the memory means (4), the system comprises first address generating means (1), which provide a memory address for a part (V1) comprising at least the color burst ($C_{bur}$), and second address generating means (2), which provide a memory address for a part (V2) comprising the information ($L_{inf}$) of the visible part of the line.

**Patentansprüche**

1. Verfahren zum Verschlüsseln eines Videobildes, realisiert an einem Übertragungsende mit einem Mittel zum Übertragen von Zeilen (VIDEO) des Videobildes in einer Reihenfolge, die sich von deren Reihenfolge in dem ursprünglichen unverwürfelten Bild unterscheidet, wobei das Mittel einen Speicher (4) mit mehreren Zeilenspeichern und ein Adreßgenerierungsmittel (1, 2) umfaßt, das auf Steuersignale anspricht, die von einem Steuerblock (5) gemäß vorbestimmten Algorithmen generiert werden, um Speicheradressen für die zu verwürfelnden Zeilen zu erzeugen, damit diese in einer neu verwürfelten Reihenfolge in einem bestimmten Zeilenspeicher des Speichers (4) gespeichert werden, so daß das verwürfelte Videobild (CODED) am Ausgang des Speichers (4) erhalten wird, wo die zu verwürfelnden Zeilen in zwei Teile (V1, V2) unterteilt werden, von denen einer (V2) die Informationen ($L_{inf}$) des sichtbaren Teils der Videozeile und der andere Teil (V1) wenigstens das Farbsynchronsignal ($C_{bur}$) enthält.

2. Verfahren nach Anspruch 1, dadurch gekennzeichnet, daß die zu verwürfelnde Zeile durch Schneiden in zwei Teile (V1, V2) unterteilt wird.

3. Verfahren nach Anspruch 1, dadurch gekennzeichnet, daß die Teile (V2) mit den Informationen ($L_{inf}$) des sichtbaren Teils der zu verwürfelnden Zeilen nach einem bestimmten Algorithmus gegenseitig verwürfelt werden.

4. Verfahren nach Anspruch 3, dadurch gekennzeichnet, daß die Teile (V1) mit dem Farbsynchronsignal ($C_{bur}$) der zu verwürfelnden Zeilen nach einem anderen bestimmten Algorithmus gegenseitig verwürfelt werden.

5. Verfahren nach Anspruch 3, dadurch gekennzeichnet, daß die das Farbsynchronsignal ($C_{bur}$) der zu verwürfelnden Zeilen umfassenden Teile (V1) in der Zeilenreihenfolge des ursprünglichen unverwürfelten Bildes gehalten werden.

6. Verfahren nach einem der vorherigen Ansprüche, dadurch gekennzeichnet, daß die unterschiedlichen Teile (V1, V2) der Zeile mit verschiedenen Speicheradressen versehen werden.

7. System zum Verschlüsseln und Entschlüsseln eines Videobildes, umfassend ein Mittel an einem Übertragungsende zum Übertragen von Zeilen (VIDEO) des Videobildes in einer Reihenfolge, die sich von deren Reihenfolge in dem ursprünglichen unverwürfelten Bild unterscheidet, wobei das Mittel einen Speicher (4) mit mehreren Zeilenspeichern und ein Adreßgenerierungsmittel (1, 2) umfaßt, das auf Steuersignale anspricht, die von einem Steuerblock (5) nach vorbestimmten Algorithmen generiert werden, und Speicheradressen für die zu verwürfelnden Zeilen erzeugt, damit diese in einer neuen verwürfelten Reihenfolge in einem bestimmten Zeilenspeicher des Speichermittels (4) gespeichert werden, so daß das verwürfelte Videobild (CODED) am Ausgang des Speichers (4) erhalten wird, wobei das System ein erstes Adreßgenerierungsmittel (1) umfaßt, das eine Speicheradresse für einen Teil (V1) bereitstellt, der wenigstens das Farbsynchronsignal ($C_{bur}$) umfaßt, und ein zweites Adreßgenerierungsmittel (2), das eine Speicheradresse für einen Teil (V2) bereitstellt, der die Informationen ($L_{inf}$) des sichtbaren Teils der Zeile umfaßt.

## Revendications

1. Procédé de cryptage d'une image vidéo, réalisé dans une extrémité émettrice par des moyens pour émettre des lignes (VIDEO) de l'image vidéo dans un ordre qui est différent de leur ordre dans l'image d'origine non brouillée, les moyens comprenant des moyens de mémoire (4), qui comprennent plusieurs mémoires de ligne, et des moyens de production d'adresse (1, 2) répondant à des signaux de commande produits par un bloc de commande (5) selon des algorithmes prédéterminés pour donner des adresses de mémoire aux lignes à brouiller pour qu'elles soient stockées dans un nouvel ordre brouillé dans une mémoire de ligne particulière des moyens de mémoire (4), de sorte que l'image vidéo brouillée (CODEE) soit obtenue à la sortie des moyens de mémoire (4), où les lignes à brouiller sont divisées en deux parties (V1, V2), dont une partie (V2) contient les informations ($L_{inf}$) de la partie visible de la ligne vidéo, et l'autre partie (V1) contient au moins la salve couleur ($C_{bur}$).

2. Procédé selon la revendication 1, caractérisé en ce que la ligne à brouiller est divisée en deux parties (V1, V2) par découpage.

3. Procédé selon la revendication 1, caractérisé en ce que les parties (V2) des informations ($L_{inf}$) de la partie visible des lignes à brouiller sont mutuellement brouillées selon un algorithme particulier.

4. Procédé selon la revendication 3, caractérisé en ce que les parties (V1) de la salve couleur ($C_{bur}$) des lignes à brouiller sont mutuellement brouillées selon un autre algorithme particulier.

5. Procédé selon la revendication 3, caractérisé en ce que les parties (V1) comprenant la salve couleur ($C_{bur}$) des lignes à brouiller sont conservées dans l'ordre de ligne de l'image d'origine non brouillée.

6. Procédé selon l'une quelconque des revendications précédentes, caractérisé en ce que les différentes parties (V1, V2) de la ligne sont munies de différentes adresses de mémoire.

7. Système de cryptage et de décryptage d'une image vidéo, comprenant, dans une extrémité émettrice, des moyens pour émettre des lignes (VIDEO) de l'image vidéo dans un ordre qui est différent de leur ordre dans l'image d'origine non brouillée, les moyens comprenant des moyens de mémoire (4), qui comprennent plusieurs mémoires de ligne, et des moyens de production d'adresse (1, 2) répondant à des signaux de commande produits par un bloc de commande (5) selon ces algorithmes prédéterminés pour donner des adresses de mémoire aux lignes à brouiller pour qu'elles soient stockées dans un nouvel ordre brouillé dans une mémoire de ligne particulière des moyens de mémoire (4), de sorte que l'image vidéo brouillée (CODEE) soit obtenue à la sortie des moyens de mémoire (4), le système comprenant des premiers moyens de production d'adresse (1), qui procurent une adresse de mémoire pour une partie (V1) comprenant au moins la salve couleur ($C_{bur}$), et des seconds moyens de production d'adresse (2), qui procurent une adresse de mémoire pour une partie (V2) comprenant les informations ($L_{inf}$) de la partie visible de la ligne.

FIG. 1

$L_{Inf}$ — Visible video — 64 us — VIDEO — $c_{bur}$

FIG. 2

$L_{Inf}$ — Visible video — V2 — K2 — $c_{bur}$ — V1 — K1

Not encrypted part of the picture

PART CONTAINING COLOR BURST (C)

c

Encrypted part of visible video

L

Not encrypted part of the picture

FIG. 3

VIDEO

| 1 |
| GENERATE ADDRESS FOR THE COLOR BURST PART |

| 3 |
| SELECTOR |

MEMORY ADDRESS

| 4 |
| VIDEO MEMORY |

| 2 |
| GENERATE ADDRESS FOR THE VISIBLE VIDEO PART |

| 5 |
| CONTROL BLOCK |

CODED

FIG. 4